**Europäisches Patentamt**

**European Patent Office**

**Office européen des brevets**

(19)

(11) Veröffentlichungsnummer : **0 161 400**
**B1**

(12) **EUROPÄISCHE PATENTSCHRIFT**

(45) Veröffentlichungstag der Patentschrift :
04.05.88

(51) Int. Cl.⁴ : **A 61 C 7/00, B 21 F 1/00**

(21) Anmeldenummer : **85101905.9**

(22) Anmeldetag : **21.02.85**

(54) **Zahntechnisches Verfahren und Vorrichtung zum Biegen und Tordieren eines Drahtstückes.**

(30) Priorität : **19.04.84 DE 3415006**

(43) Veröffentlichungstag der Anmeldung :
**21.11.85 Patentblatt 85/47**

(45) Bekanntmachung des Hinweises auf die Patenterteilung : **04.05.88 Patentblatt 88/18**

(84) Benannte Vertragsstaaten :
**AT BE CH DE FR GB IT LI NL SE**

(56) Entgegenhaltungen :
**EP-A- 0 025 911**
**EP-A- 0 041 258**
**EP-A- 0 054 785**
**DE-A- 2 712 843**
**DE-B- 2 711 688**
**GB-A- 1 444 902**
**US-A- 3 906 634**

(73) Patentinhaber : **Orthuber, Wolfgang**
**Arbeostrasse 3**
**D-8358 Vilshofen (DE)**

**Fischer-Brandies, Helge Dr.**
**Walterstrasse 22/V**
**D-8000 München 2 (DE)**

(72) Erfinder : **Orthuber, Wolfgang**
**Arbeostrasse 3**
**D-8358 Vilshofen (DE)**
Erfinder : **Fischer-Brandies, Helge Dr.**
**Walterstrasse 22/V**
**D-8000 München 2 (DE)**

(74) Vertreter : **Münzhuber, Robert, Dipl.-Phys.**
**Patentanwalt Rumfordstrasse 10**
**D-8000 München 5 (DE)**

EP 0 161 400 B1

**Beschreibung**

Die Erfindung betrifft eine Biegemaschine zum Anpassen eines Drahtstückes an die Gebiß- und/ oder Kieferform eines Patienten durch mehrfaches Biegen und Tordieren des Drahtes sowie ein zahnmedizinisches Verfahren zum computergesteuerten Anpassen eines Drahtes an die in den Computer eingegebene Gebiß- und/oder Kieferform eines Patienten durch Aneinanderreihung einzelner Biege- und Torsionsvorgänge.

Aus der DE-B-2 711 688 ist zwar ein Verfahren zum Anpassen eines Drahtstückes an die Gebißform eines Patienten bekannt, bei dem anhand der zuvor ermittelten Formdaten des Gebisses eine mehrfache Biegung und gegebenenfalls eine Tordierung des Drahtstückes durchgeführt wird. Die Biegung, die Tordierung sowie der Drahtvorschub müssen jedoch unabhängig voneinander vom Orthodenten in Handarbeit durchgeführt werden, so daß auch hier die Vorgänge sehr zeitraubend sind und eines Fachmanns bedürfen.

Aufgabe der vorliegenden Erfindung ist es deshalb, eine Biegemaschine und ein zahnmedizinisches Verfahren zu schaffen, mit deren Hilfe es gelingt, die zur Anpassung erforderlichen Biegeund Torsionsvorgänge schnell, genau und mühelose durchzuführen, und zwar mit exakter Reproduzierbarkeit.

Die vorrichtungsgemäße Lösung besteht in einer Biegemaschine mit einer Vorschubvorrichtung, einer Torsionsvorrichtung und einer Biegevorrichtung mit jeweils gesondertem, durch elektronische Steuerbefehle steuerbaren Antrieb, wobei die Torsionsvorrichtung aus zwei relativ gegeneinander durch den zugeordneten Antrieb verdrehbaren Greifern besteht, die in Richtung der Torsionsachse so versetzt angeordnet sind, daß sie in zwei im Abstand befindlichen Stellen des Drahtes an diesem angreifen, und wobei die Biegevorrichtung eine im wesentlichen senkrecht zur Torsionsachse durch den zugeordneten Antrieb gegen die Torsionsachse verschiebbare Biegekante aufweist.

Mit dieser Biegemaschine wird also die Möglichkeit geschaffen, die vorab erwähnten Vorgänge maschinell durchzuführen, wobei die Arbeitsvorgänge, nämlich Drahtvorschub, Tordierung und Biegung, von einem elektronischen Rechner steuerbar sind.

Die verfahrensgemäße Lösung besteht in einem zahnmedizinischen Verfahren zum computergesteuerten Anpassen eines Drahtes an die in den Computer eingegebene Gebiß- und/oder Kieferform eines Patienten durch Aneinanderreihung einzelner Biege- und Torsionsvorgänge, wobei die einzelnen Verfahrensschritte darin bestehen, daß zunächst die computergespeicherte dreidimensionale Soll-Form des Drahtes in einzelne Formelemente mit jeweils konstanten Werten für den Krümmungsradius der Biegung und gegebenenfalls den Steilheitsgrad der Torsion zerlegt wird, wobei auch eine Bestimmung der zur restlichen Drahtform relativen Richtung oder Biegung erfolgt, daß dann die Formgebung der Formelemente nacheinander in der Weise verwirklicht wird, daß der untordierte, gerade Draht schrittweise um einen variierbaren Betrag durch eine verschließbare Führung vorgeschoben wird, die den Draht nach jedem Vorschubschritt an einem definierten Bearbeitungspunkt fixiert, daß die Torsion vor diesem Punkt durch einen relativ zur erwähnten Führung um die Drahtlängsachse verdrehbaren Greifer vollzogen wird, daß die Biegung des gegebenenfalls tordierten aber noch geraden Drahtes nach diesem Punkt durch die Bewegung eines Biegewerkzeuges zum Draht hin aus einer relativ um die Achse des sich dort befindenden Drahtstückes variierbaren Richtung durchgeführt wird, und daß die Variation von Vorschublänge, Betrag oder Torsion, Betrag und Richtung der Biegung über jeweils gesondert zugeordnete Antrieb voneinander unabhängig durch den Computer gesteuert wird.

Der Kieferorthopäde gibt also zunächst in den Rechner die gewünschten Formdaten für das Drahtstück ein, worauf ein gerades Drahtstück in die Biegemaschine eingelegt wird, die dann den gesamten Biege- und Torsionsvorgang unter Steuerung durch den Rechner selbsttätig vornimmt. Das Drahtstück wird dabei schrittweise durch die Maschine hindurchgeführt und jeweils zwischen zwei Vorschubschritten tordiert und/ oder gebogen. Es ist verständlich, daß gegenüber der manuellen Bearbeitung sowohl die Schnelligkeit als auch die Exaktheit wesentlich gesteigert werden. Auch läuft der Vorgang wesentlich müheloser ab, weil lediglich die gewünschten Daten in den Rechner einzugeben sind. Schließlich kann eine exakte Reproduzierbarkeit erreicht werden, und zwar auf einfache Weise dadurch, daß im Rechner die Eingabedaten gespeichert werden. Dabei ist es dann darüberhinaus möglich, bei entsprechender Programmgestaltung für den Rechner in bestimmten Zeitabständen erforderliche Nachanpassungen auf der Grundlage von Erfahrungswerten zumindest teilweise selbsttätig durchführen zu lassen.

Besonders zweckmäßige Ausgestaltungen der erfindungsgemäßen Biegemaschine sind in den Ansprüchen 2 bis 16 gekennzeichnet.

Auf der Zeichnung sind Ausführungsformen der erfindungsgemäßen Biegemaschine dargestellt. Es zeigen :

Fig. 1 eine Schemaskizze im Längsschnitt (Biegeebene ist Bildebene) einer ersten Ausführungsform der Biegemaschine,

Fig. 2 eine Frontansicht auf die Maschine von Fig. 1 in Richtung des Pfeils 10,

Fig. 3 eine Ansicht gemäß Fig. 1 einer zweiten Ausführungsform der Biegemaschine,

Fig. 4 eine Frontansicht der Biegemaschine von Fig. 3 in Richtung des Pfeils 12,

Fig. 5 einen Verriegelungsmechanismus für das Drehlager der Biegemaschine von Fig. 3,

Fig. 6 eine Ansicht gemäß Fig. 1 einer weiteren Abwandlungsform der Biegemaschine, und

Fig. 7 eine Frontansicht der Biegemaschine von Fig. 6.

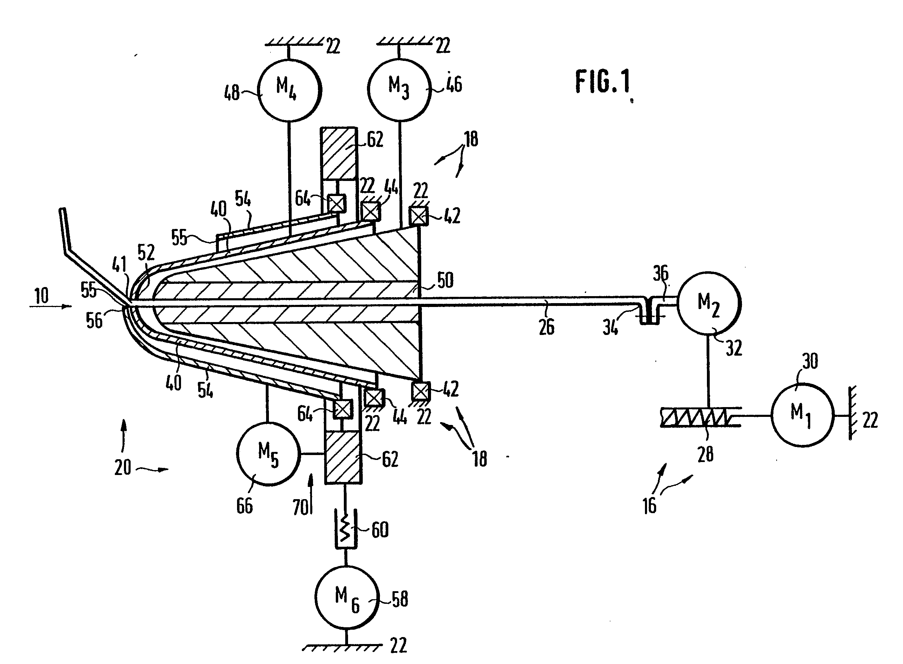

Die in Fig. 1 schematisch dargestellte Biegemaschine kann funktionsmäßig in drei Hauptelemente unterteilt werden, nämlich eine Vorschubvorrichtung 16, eine Torsionsvorrichtung 18 und eine Biegevorrichtung 20. Dabei sind diese Hauptelemente 16, 18 und 20 in einem nur teilweise angedeuteten Gehäuse 22 angeordnet und verankert. Der in der Biegemaschine zu bearbeitende Draht 26 durchläuft die Maschine in Richtung des Pfeils 24, wobei in die Vorschubvorrichtung 16 zunächst in der Torsionsvorrichtung 18 und dann in der Biegevorrichtung 20 verschiebt. Nachfolgend sollen nun diese drei Hauptelemente 16, 18, 20 im einzelnen erläutert werden.

Die Vorschubvorrichtung 16 weist eine Schraubenspindel 28 auf, die von einem im Gehäuse 22 verankerten Vorschubmotor 30 (Schrittschaltmotor) angetrieben wird. Die Schraubspindel 28 ist über einen — auf der Zeichnung nicht dargestellten — Vorschubschlitten fest mit einem Motor 32 verbunden, der zum Verdrehen des Drahtes 26 dient und deshalb nachfolgend kurz mit dem Drahtdrehmotor 32 bezeichnet wird. Der Draht 26 ist bei 34 unverschieblich an der Antriebswelle 36 des Drahtdrehmotors 32 befestigt. Dabei wird der Draht in seinem Endbereich abgeknickt, so daß seine Richtung feststeht, also eine definierte Drehung um die Drahtlängsachse möglich ist, auch wenn der Draht rund sein sollte.

Die Torsionsvorrichtung 18 besteht im wesentlichen aus einem backenartigen Torsionswerkzeug 38 und einer Drehplatte 40 mit Drahtdurchtrittsfenster 41, deren Gestalt in etwa einer um ihre Symmetrieachse rotierenden Parabel entspricht, wobei die Symmetrieachse mit der Drahtlängsachse zusammenfällt. Werkzeug 38 und Platte 40 sind in gehäusefesten Lagern 42 und 44 um die Drahtlängsachse drehbar, wobei die Drehung des Werkzeugs 38 von einem Motor 46, der nachfolgend als Torsionsmotor 46 bezeichnet ist, die Drehung der Platte 40 dagegen durch einen Motor 48 bewirkt wird. Das Torsionswerkzeug 38 weist eine breite Drahtauflagefläche 50 auf, durch welche der Draht 26 in seiner Vorschubrichtung 24 geführt aber zugleich — wenn er unrund ist — gegen eine Verdrehung um seine Längsachse gesichert ist, bei Drehungen des Torsionswerkzeugs 38 also diese Drehungen mitmachen muß. Die Drehplatte 40 ist mit einer schmalen Drahtauflagefläche 52 versehen, die den Draht ebenfalls in Drahtlängsrichtung führt, gegenüber Radialdrehungen jedoch — bei unrundem Draht — festhält. Dadurch ist der Draht 26 zwischen dem Torsionswerkzeug 38 und der Drehplatte 40 tordierbar.

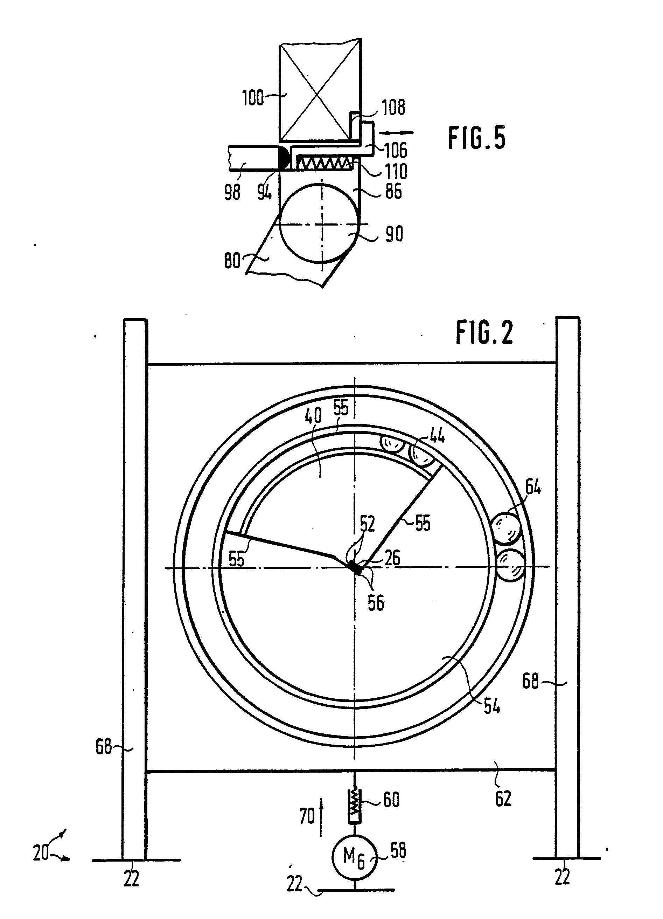

Die Biegevorrichtung 20 besteht aus einer Biegeplatte 54 und einer Drehplatte, wobei die Drehplatte durch die Drehplatte 40 der Torsionsvorrichtung 18 gebildet wird, die Drehplatte 40 also funktionsmäßig sowohl ein Teil der Torsionsvorrichtung 18 als auch der Biegevorrichtung 20 darstellt. Das plattenartige Biegewerkzeug 54 ist ähnlich wie die Drehplatte 40 geformt, weist jedoch ein Drahtdurchtrittsfenster 55 auf, welches sich — wie am besten aus Fig. 2 ersichtlich — oberhalb des Drahtes als Ausschnitt fortsetzt. Durch diese Form und Anordnung des Fensters 55 wird bewirkt, daß das Biegewerkzeug 54 den Draht 26 nur auf seiner Unterseite berührt, und zwar mit der Biegekante 56 (Unterkante des Fensters 55), der Draht nach oben hin aber eine Bewegungsfreiheit besitzt. Der Antrieb der Biegevorrichtung erfolgt durch einen gehäusefesten Biegemotor 58, und zwar über eine Schraubenspindel 60, die an einem Heberahmen 62 befestigt ist. In diesem Heberahmen 62 ist die Biegeplatte 54 in einem Lager 64 um die Drahtlängsachse drehbar. Die Drehung wird durch einen am Heberahmen 62 befindlichen Motor 66 bewirkt, der nachfolgend als Hebeplattenmotor 66 bezeichnet wird. Über eine Führung 68 ist der Heberahmen 62 im Gehäuse 22 vertikal verschiebbar gelagert.

Die Arbeitsweise der Biegemaschine wird nachfolgend zunächst an Hand eines runden Drahtes 26 beschrieben, also eines Drahtes, der nur gebogen aber nicht tordiert werden muß.

Der in die Maschine eingelegte runde Draht 26 wird zusammen mit dem Drahtdrehmotor 32 durch die Schraubenspindel 28 und den Vorschubmotor 30 schrittweise in Richtung des Pfeils 24 vorgeschoben und gleitet dabei über die Drahtauflageflächen 50 Torsionswerkzeugs 38 und 52 der Drehplatte 40, welche ihn allseitig berührend führen nach vorne zur Biegekante 56.

Jedesmal dann, wenn nun nach einem Vorschubschritt der Draht 26 zwischen der Auflagefläche 52 der Drehplatte 40 und der Biegekante 56 gebogen werden soll, hebt der Biegemotor 58 mittels der Schraubenspindel 60 den Heberahmen 62 und damit die Biegeplatte 54 in Richtung des Pfeils 70 an. Der Draht 26 wird somit zwischen der diese Bewegung nicht mitmachenden Auflagefläche 52 und der Biegekante 56 nach oben gebogen, wobei die Stärke der Biegung durch den Anhebeweg der Biegeplatte 54 und damit durch den Biegemotor 58 bestimmt ist. Die Biegung erfolgt in einer relativ zur Maschine exakt definierten Biegeebene, im vorgegebenen Fall in der Bildebene von Fig. 1. Dabei ist jedoch trotzdem die Biegerichtung des Drahts beliebig wählbar, und zwar durch Drehung des Drahtes 26 um seine Längsachse. Diese Drehstellung des Drahtes um seine Längsachse bestimmt offensichtlich die Biegerichtung. Die Drehung kann vor jedem Biegevorgang mittels des Drahtdrehmotors 32 festgelegt werden.

Nachfolgend wird nun der Vorgang bei einem kantigen, also unrunden Draht beschrieben, der zusätzlich zu den Biegungen Torsionen unterworfen werden soll.

Der Vorschub erfolgt wie bei einem runden Draht. Die Auflageflächen 50 des Torsionswerkzeugs 38 und 52 der Drehplatte 40 haben jedoch bei einem kantigen Draht zusätzlich zu dessen Führung die Aufgabe, den Draht zu tordieren. Nachdem der Draht 26 von den beiden Flächen 50 und 52 eng umgeben wird, kann der dadurch tordiert werden, daß eine Verdrehung der beiden Flächen 50 und 52 gegeneinander erfolgt. Genauer gesagt, der Torsionsmotor 46 dreht das Torsionswerkzeug 38, während der Drahtdrehmotor 48 die Drehplatte 40 gegen eine Verdrehung festhält. Der Drahtdrehmotor 32 wäre somit bei kantigem Draht nicht notwendig, erbringt jedoch den Vorteil, daß er die Drehungen des Torsionswerkzeugs 38 nachvollzieht und somit die Funktion eines Drehlagers übernimmt, womit ein spannungsfreier Vorschub des Drahtes 26 gewährleistet ist. Die Biegung des Drahtes erfolgt grundsätzlich wie beim runden Draht, jedoch ergeben sich zwei Besonderheiten. Während beim runden Draht die Biegerichtung durch den Drahtdrehmotor 32 und seine Welle 36 bestimmt wird, erfolgt die Drehung des kantigen, tordierten Drahtes durch den Drahtdrehmotor 48 und die Drehplatte 40, die während des vorhergehenden Torsionsvorgangs Festhaltefunktion haben. Weiterhin ist von Bedeutung, daß der Biegeplattenmotor 66 nun die Funktion hat, die Biegeplatte 54 vor jedem Biegevorgang so zu drehen, daß deren Biegekante 56 parallel zur unteren Fläche des Drahtes verläuft, die Drahtunterseite also gleichmäßig an der Biegekante 56 anliegt. Damit wird verhindert, daß der Draht sich während des Biegevorgangs verwindet und es so zu unkontrollierbaren Fehlern kommt. Aus Fig. 2 ist ersichtlich, daß diese Drehung von der Lage des kantigen Drahtes abhängt und somit von der Winkelstellung der Drehplatte 40 abhängig ist. Jedenfalls wird durch diese Maßnahmen gewährleistet, daß auch im Falle eines tordierten kantigen Drahtes, vorzugsweise eines Drahtes mit rechteckigem Querschnitt, die Biegerichtung exakt definiert ist.

Die erwähnten Torsions- und Biegevorgänge wiederholen sich so oft, bis alle gewünschten Tordierungen und Biegungen durchgeführt worden sind.

Die Zahl der Torsions- und Biegevorgänge, ihr Ort, ihre Richtung und ihre Stärke werden durch die gesondert steuerbaren Motoren 30, 32, 46, 48, 58 und 66 bestimmt. Diese vergleichsweise komplizierte Steuerung kann jedoch auf einfache Weise dadurch erfolgen, daß als Steuerorgan ein elektronischer Rechner dient, der mit einem entsprechenden Programm ausgerüstet wird. Die Bedienungsperson hat dann lediglich die gewünschten Werte in den Rechner einzugeben, worauf der Rechner die Motoren so steuert, daß der eingelegte Draht von der Biegemaschine selbsttätig in der gewünschten Weise tordiert und gebogen wird. Das bedeutet aber, daß jederzeit alle Parameter der Torsionen und Biegungen bezüglich Zahl, Ort, Betrag und Richtung unabhängig voneinander variiert werden können. Durch Kombination mehrerer kleiner Biegungen sind auch resultierende Biegungen mit größerem Radius möglich. Gleiches gilt für die Torsion. Die einzige Einschränkung bezüglich der Biegung besteht in der Möglichkeit, daß ein mehrfach gebogener Draht mit dem Gehäuse der Biegemaschine zusammenstößt. Aus diesem Grund ist bei der Ausführungsform von Fig. 1 eine zur Biegekante 56 hin sich verjüngende Form der Maschine gewählt, womit die erwähnte Gefahr wesentlich vermindert und die Möglichkeit einer auch sehr starken Drahtbiegung geschaffen wird. Darüberhinaus aber erbringt diese Formgebung der Maschine auch eine erhöhte Stabilität. Weiterhin ist es möglich, das steuernde Programm so zu gestalten, daß ein mögliches Anstoßen des Drahtes rechtzeitig durch markierte Ausgleichsbiegungen verhindert wird, wobei dann diese markierten Ausgleichsbedingungen nach Entnahme des Drahtes aus der Biegemaschine manuell zu begradigen sind. Selbstverständlich handelt es sich dabei lediglich um Extremfälle. Bei den Motoren kann es sich um elektrische, hydraulische oder pneumatische Antriebe handeln, wobei es möglich ist, lediglich einen einzigen Hauptantrieb einzusetzen, der dann über entsprechend steuerbare Kupplungen und Getrieb die gesonderten Bewegungsvorgänge vornimmt.

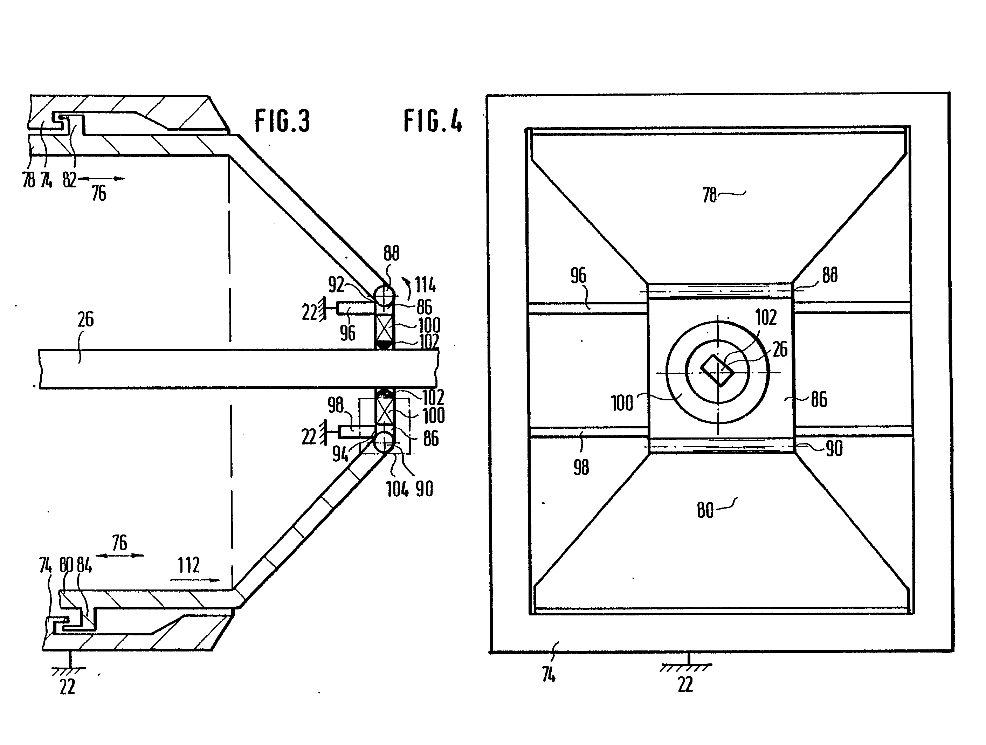

Fig. 3 zeigt eine Ausführungsform der Biegemaschine mit modifizierter Biegevorrichtung 20. Auf eine Beschreibung der gleichbleibenden Vorschubvorrichtung 16 und Torsionsvorrichtung 18 kann deshalb hier verzichtet werden.

Die Biegevorrichtung 20 nach Fig. 3 ist, wie dies auch aus Fig. 4 hervorgeht, von einem mit dem Gehäuse 22 verbundenen Führungsrohr 74 umgeben. Dieses Rohr 74 führt zwei horizontal in Pfeilrichtung 76 durch nicht gezeichnete Schubmotoren verschiebbare Stäbe 78 und 80, stabilisiert sie somit gegen vertikale Kräfte. Haltedorne 82 und 84 verhindern in der gezeichneten Ruhelage auch Bewegungen der Stäbe 78 und 80 zum Draht hin. Die beiden Stäbe 78 und 80 halten zwischen sich eine Biegeplatte 86 über zwei Kipplager 88 und 90 fest. In Ruhestellung befindet sich diese an den Punkten 92 und 94 nahe zweier mit dem Gehäuse 22 verbundenen Querstangen 96 und 98. Über ein während der Biegung gesperrtes, in Ruhestellung dagegen um die Drahtlängsachse drehbares Lager 100 ist eine den Draht 26 allseits berührende Biegekante 102 aufgehängt.

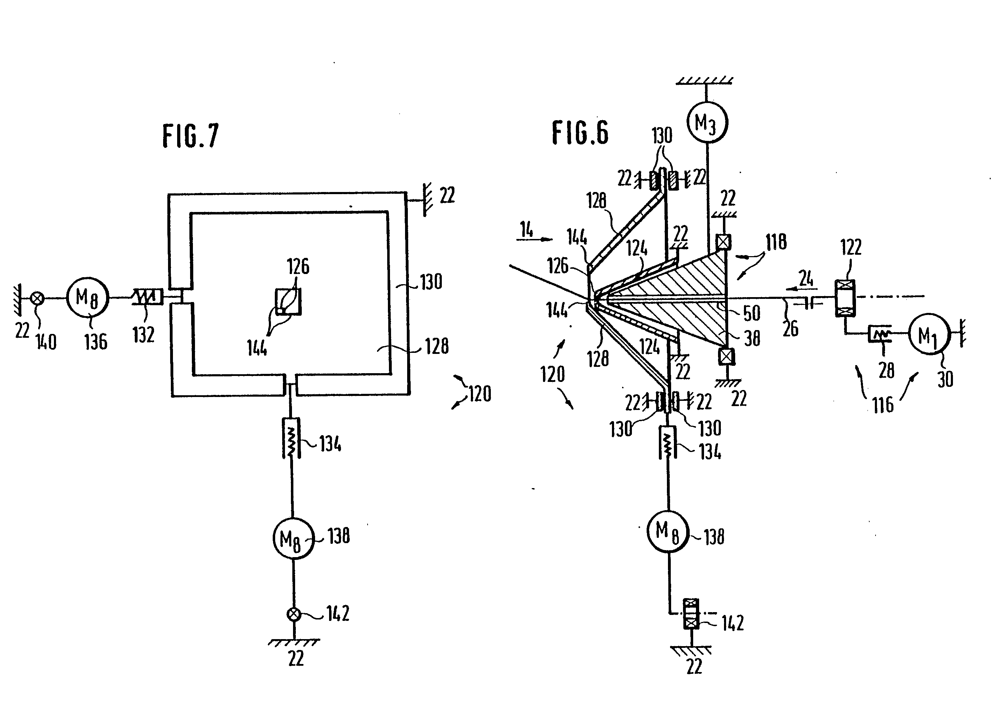

Fig. 5 zeigt einen in Fig. 3 mit 104 bezeichneten Bereich in vergrößertem Maßstab zur Darstellung eines möglichen Störmechanismus für das Lager 100. In der gezeichneten Ruhestellung berührt die Querstange 98 im Punkt 94 einen in der Biegeplatte 86 befindlichen Sperriegel 106, sodaß dieser ein Sperrloch 108, freigibt, wobei sich am Umfang des Lagers eine Mehrzahl solcher Sperrlöcher 108 befindet. Ohne die erwähnte Berührung würde die Spiralfeder 110 den Sperriegel 106 in das Sperrloch 108 drücken und so jegliche weitere Drehung des Lagers 100 verhindern.

Die Biegung des bereits tordierten und ausgerichteten Drahtes 26 erfolgt bei dieser Ausführungsform durch den Vorschub des Schiebestabes 80 in Richtung des Pfeiles 112, wobei der Gegenstab 78 gleichzeitig in der gezeichneten Ruhestellung verharrt. Dadurch bleibt auch das Kipplager 88 ortsfest, während das untere Kipplager 90 nach vorne geschoben wird. Die an den beiden Kipplagern aufgehängte Biegeplatte 86 dreht sich somit in Richtung des Pfeils 114 um das feststehende Kipplager 88. Das Lager 100 überträgt die Bewegung mittels seiner Biegekante 102 auf den Draht 26 sodaß dieser nach oben gebogen wird. Da dabei die Querstange 98 den Sperriegel im Punkt 94 nicht berührt (Fig. 5), drückt die Spiralfeder 110 diesen in eines der Sperrlöcher 108 des Lagers 100 und fixiert damit den Drehwinkel des Lagers in der Stellung, den es vor der Biegung hatte. Der Draht 26 hat somit keine Möglichkeit, sich während seiner Biegung zu verdrehen ; die Biegerichtung bleibt stehts in der Bildebene von Fig. 3 und ist damit in definierter Weise durch die vorherige Drehung des Drahtes 26 bestimmbar.

Der Vorteil der eben beschriebenen Ausführungsform gegenüber der zum ersten genannten Ausführungsform besteht darin, daß der Motor 66 von Fig. 1 entfällt, weil seine Aufgabe durch das sperrbare Lager 100 übernommen wird. Aufgrund der symmetrischen Anordnung ist ein Wechsel der Biegerichtung um 180° ohne sonst notwendige Drehung des Drahtes 26 möglich. Außerdem sind die während der Biegung auftretenden, das Gehäuse 22 belastenden Kräfte beträchtlich vermindert, sodaß das Gehäuse verkleinert werden kann, was die Bewegungsfreiheit für den gebogenen Draht erhöht. Biegungen mit sehr kleinem Radius sind jedoch schwieriger durchzuführen, weil der Abstand der Drahtachse von den Kipplagern 88 und 90 nur begrenzt verkleinerbar ist.

Die Fig. 6 und 7 zeigen eine dritte Ausführungsform der Biegemaschine, die für rechteckige Drähte bestimmt ist. Vorab sei bereits darauf hingewiesen, daß diese Biegemaschine mit vier Motoren auskommt und daß die Bestimmung der Biegerichtung nicht durch Drehung des Drahtes 26 sondern durch Veränderung der Biegerichtung relativ zur gesamten Maschine erfolgt.

Die Biegemaschine besteht wiederum aus drei Hauptelementen, nämlich einer Vorschubvorrichtung 116, einer Torsionsvorrichtung 118 und einer Biegevorrichtung 120. Nachfolgend werden nun diejenigen Teile dieser Hauptelemente erläutert, die sich von denjenigen des ersten Ausführungsbeispiels unterscheiden.

Bei der Vorschubvorrichtung 116 ist der für die Drehung von runden Drähten vorgesehene Drahtdrehmotor 32 der Fig. 1 durch ein Lager 12 ersetzt. Das Lager überträgt die Vorschubbewegung auf den Draht, wobei jedoch der Draht um seine Achse drehbar bleibt. Bei der Torsionsvorrichtung 118 ist die frühere Drehplatte 40 durch eine Halteplatte 124 ersetzt. Die Platte 124 ist fest am Gehäuse 22 verankert, ihre Formgebung und ihre Drahtauflagefläche 126 entsprechen jedoch der Drehplatte 40. Der Draht 26 ist somit nur in Vorschubrichtung des Pfeils 24 beweglich, seine Winkeleinstellung bezüglich der Längsachse bleibt dagegen fest. Selbstverständlich entfällt damit auch die Erfordernis des Drahtdrehmotors 48.

Ähnlich wie bei der Ausführungsform nach Fig. 1 dient auch bei der jetzt zu erläuternden Ausführungsform die Halteplatte 124 zusätzlich als Teil der Biegevorrichtung 120. Ferner weist die Biegevorrichtung 120 eine Biegeplatte 128 auf, die über einen Führungsrahmen 130 (Fig. 7) im Gehäuse aufgehängt ist, derart, daß sie in einer senkrecht zur Drahtlängsachse stehenden Ebene (Bildebene von Fig. 7) nach allen Seiten verschieblich ist. Die genaue Position der Platte 128 innerhalb dieser Ebene wird mittels zweier rechtwinkelig zueinander stehender Schraubentriebe 132 und 134 eingestellt, die durch Motoren 136 bzw. 138 antreibbar sind. Die beiden Schraubenmotoren 136 und 138 sind über Lager 140 und 142 mit dem Gehäuse 22 verbunden und somit auch in Schubrichtung des jeweils anderen Motors bewegbar. In der Biegeplatte 128 befindet sich ein Biegefenster 144, dessen Kantenwinkel dem des Drahtes 26 entspricht. Das Biegefenster 144 kann somit den Draht stets an zwei seiner Außenflächen gleichzeitig berühren ; durch entsprechende Dimensionierung des Fensters 144 wird jedoch sichergestellt, daß der Draht bezüglich seiner beiden anderen Seiten bewegungsfrei bleibt.

Der Biegevorgang verläuft bei der Ausführungsform nach den Fig. 6 und 7 folgendermaßen. Der Vorschub des Drahtes 26 ergibt sich in derselben Weise, wie vorab anhand von Fig. 1 beschrieben worden ist. Der Draht 26 wird jedoch dann (Fig. 6) zwischen den Anlageflächen 50 des Torsionswerkzeugs 38 und 126 der Halteplatte 124 tordiert. Die während der Torsion auftretende Drehung des hinteren Drahtendes wird durch das Lager 122 kompensiert. Die nach der Torsion durchgeführte Biegung erfolgt zwischen den Anlageflächen 126 der Halteplatte 124 und dem Biegefenster 144. Dabei wird das Biegefenster 144 vorab stets so eingestellt, daß es den Draht an zwei seiner Flächen gleichzeitig berührt und ihm im Bereich der Biegerichtung genügend Raum freiläßt (in Fig. 7 nach oben-rechts). Die genaue Biegerichtung wird durch das Verhältnis der beiden von den Schubmotoren 138 und 140 bewirkten Relativverschiebungen zwischen der Biegeplatte 128 bzw. Biegefenster 144 und den Drahtauflageflächen 126 der Halteplatte 124 bestimmt. Der Absolutbetrag der erwähnten relativen Bewegung definiert die Größe des Biegewinkels.

Die Ausführungsform nach den Fig. 6 und 7 zeichnet sich durch konstruktive Einfachheit aus, setzt jedoch eine mechanisch besonders stabile Verwirklichung voraus, damit die Biegerichtung exakt bestimmbar bleibt.

Selbstverständlich kann die Erfindung zahlreiche Abwandlungen erfahren, ohne den Bereich der Erfindung zu verlassen. Dies gilt insbesondere für die Formgebung, die Lager und die Antriebselemente der einzelnen Tauteile. Weiterhin können zusätzlich Sensoren optischer oder mechanischer Art vorgesehen sein, welche die Genauigkeit der Arbeitsgänge durch Rückmeldung an den die Motoren steuernden Rechner erhöhen. Weiterhin ist der Anbau üblicher Markierungs- und Schneidvorrichtungen möglich. Bezüglich des Rechners und der Steuerprogramme ist zu sagen, daß hier mit bekannten Geräten und bekannten Methoden zur Programmierung auszukommen ist. Auf eine detaillierte Beschreibung des Rechners und brauchbarer Rechenprogramme wird deshalb verzichtet. Verständlicherweise ist es durch die in weiten Grenzen durchführbare Modifikation des Steuerprogramms bzw. der davon benutzten Werttabellen ohne wesentlichen konstruktiven Aufwand möglich, mit ein und derselben Vorrichtung die unterschiedlichsten Biege- und/oder Torsionsvorgänge durchzuführen. Es sei lediglich darauf hingewiesen, daß beispielsweise im Programm auch Erfahrungswerte für in der Kieferorthopädie in zeitlichen Abständen vorzunehmende Biege- und Torsionsänderungen eingearbeitet werden können, derart, daß die nach einer gewissen Zeit sonst erforderlichen Nachbiegungen bzw. Nachtorsionen des Drahtes entfallen und die Biegung und Torsion eines neuen Drahtes automatisch ablaufen, d. h. ohne Eingabe neuer Werte bzw. einer Eingabe nur eines Teils der Werte.

**Patentansprüche**

1. Biegemaschine zum Anpassen eines Drahtstückes an die Gebiß- und/oder Kieferform eines Patienten durch mehrfaches Biegen und Tordieren des Drahtes, mit einer Vorschubvorrichtung (16, 116), einer Torsionsvorrichtung (18, 118) und einer Biegevorrichtung (20, 120) mit jeweils gesondertem, durch elektronische Steuerbefehle steuerbaren Antrieb (30 ; 46 ; 58), wobei die Torsionsvorrichtung (18, 118) aus zwei relativ gegeneinander durch den zugeordneten Antrieb (46) verdrehbaren Greifern (38 ; 40, 124) besteht, die in Richtung der Torsionsachse so versetzt angeordnet sind, daß sie in zwei in Abstand befindlichen Stellen des Drahtes (26) an diesen angreifen, und wobei die Biegevorrichtung (20, 120) eine im wesentlichen senkrecht zur Torsionsachse durch den zugeordneten Antrieb (58) gegen die Torsionsachse verschiebbare Biegekante (56) aufweist.

2. Biegemaschine nach Anspruch 1, dadurch gekennzeichnet, daß die Vorschubvorrichtung (16, 116) eine vom Vorschubmotor (30) angetriebene Schraubenspindel (28) aufweist, auf der ein Vorschubschlitten angeordnet ist.

3. Biegemaschine nach Anspruch 2, dadurch gekennzeichnet, daß auf dem Vorschubschlitten ein Drahtdrehmotor (32) angeordnet ist, an dessen Abtriebswelle (36) das einzulegende Drahtstück (26) befestigbar ist.

4. Biegemaschine nach Anspruch 2, dadurch gekennzeichnet, daß der Vorschubschlitten mit einem Lager (122) zum drehfreien Einsetzen des Drahtstückes (26) versehen ist.

5. Biegemaschine nach einem der Ansprüche 1 bis 4, dadurch gekennzeichnet, daß die Torsionsvorrichtung (18) aus einem backenartigen Torsionswerkzeug (38) und einer Drehplatte (40) mit Drahtdurchtrittsfenster (41) besteht, wobei Torsionswerkzeug (38) und Drehplatte (40) in gehäusefesten Lagern (42, 44) um die Längsachse des eingesetzten Drahtes (26) drehbar gelagert sind.

6. Biegemaschine nach einem der Ansprüche 1 bis 4, dadurch gekennzeichnet, daß die Torsionsvorrichtung (118) aus einem Torsionswerkzeug (38) und einer Halteplatte (124) besteht, die fest am Gehäuse (22) verankert ist.

7. Biegemaschine nach Anspruch 5 oder 6, dadurch gekennzeichnet, daß die Drehplatte (40) bzw. die Halteplatte (124) eine Gestalt aufweist, die in etwa einer um ihre Symmetrieachse rotierenden Parabel entspricht, wobei die Symmetrieachse mit der Längsachse des eingelegten Drahtes zusammenfällt.

8. Biegemaschine nach einem der Ansprüche 5 bis 7, dadurch gekennzeichnet, daß die Biegevorrichtung (20, 120) aus einer Biegeplatte (54, 86, 128) mit Drahtdurchtrittsfenster (55) und einer Drehplatte besteht, wobei die Drehplatte durch die Drehplatte (40) der Torsionsvorrichtung (18) gebildet ist.

9. Biegemaschine nach Anspruch 8, dadurch gekennzeichnet, daß die Biegeplatte (54) um die Drahtlängsachse drehbar ist.

10. Biegemaschine nach Anspruch 8, dadurch gekennzeichnet, daß die Biegeplatte (86) im Gehäuse (22) kippbar gelagert ist.

11. Biegemaschine nach Anspruch 8, dadurch gekennzeichnet, daß die Biegevorrichtung (120) eine Biegeplate (128) aufweist, die über einen Führungsrahmen (130) derart im Gehäuse (22) aufgehängt ist, daß sie in einer senkrecht zur Längsachse des eingelegten Drahtes stehenden Ebene allseitig verschiebbar ist.

12. Biegemaschine nach Anspruch 11, dadurch gekennzeichnet, daß der Führungsrahmen (130) durch zwei rechtwinkelig zueinanderstehende, durch gesonderte Motoren (136, 138) antreibbare Schraubentriebe (132, 134) verschiebbar ist.

13. Biegemaschine nach einem der Ansprüche 1 bis 12, dadurch gekennzeichnet, daß die Antriebsmotoren Schrittschalt-Elektromotoren sind.

14. Biegemaschine nach einem der Ansprüche 1 bis 13, gekennzeichnet durch die Drahtstellung überwachende Sensoren, die an den Rechner angeschlossen sind.

15. Biegemaschine nach einem der Ansprüche 1 bis 14, gekennzeichnet durch eine Drahtschneide- und/oder Drahtmarkierungsvorrichtung.

16. Biegemaschine nach einem der Ansprüche 8 bis 10, dadurch gekennzeichnet, daß die am Draht (26) angreifende Biegekante (56, 102) kreisförmig ausgebildet ist und nur Drahtkanten berührt.

17. Zahnmedizinisches Verfahren zum computergesteuerten Anpassen eines Drahtes an die in den Computer eingegebene Gebiß- und/oder Kieferform eines Patienten durch Aneinanderreihung einzelner Biege- und Torsionsvorgänge, mit den Verfahrensschritten, daß zunächst die im Computer gespeicherte dreidimensionale Soll-Form des Drahtes in einzelne Formelemente mit jeweils konstanten Werten für den Krümmungsradius der Biegung und gegebenenfalls den Steilheitsgrad der Torsion zerlegt wird, wobei auch eine Bestimmung der zur restlichen Drahtform relativen Richtung oder Beigung erfolgt, daß dann die Formgebung der Formelemente nacheinander in der Weise verwirklicht wird, daß der untordierte, gerade Draht schrittweise um einen variierbaren Betrag durch eine verschließbare Führung vorgeschoben wird, die den Draht nach jedem Vorschubschritt an einem definierten Bearbeitungspunkt fixiert, daß die Torsion vor diesem Punkt durch einen relativ zur erwähnten Führung um die Drahtlängsachse verdrehbaren Greifer vollzogen wird, daß die Biegung des gegebenenfalls tordierten aber noch geraden Drahtes nach diesem Punkt durch die Bewegung eines Biegewerkzeugs zum Draht hin aus einer relativ um die Achse des sich dort befindenden Drahtstücks variierbaren Richtung durchgeführt wird, und daß die Variation von Vorschublänge, Betrag der Torsion, Betrag und Richtung der Biegung über jeweils gesondert zugeordnete Antriebe voneinander unabhängig durch den Computer gesteuert wird.

## Claims

1. Bending machine for adapting a piece of wire to the shape of the teeth and/or the jaw of a patient by repeatedly bending and twisting the wire, with a feed device (16, 116), a twisting device (18, 118) and a bending device (20, 120), each with a separate drive (30 ; 46 ; 58) controllable by electronic control commands, wherein the twisting device (18, 118) comprises two grippers (38 ; 40, 124), rotatable relatively to each other by means of the associated drive (46), which are arranged with an offset in the direction of the twisting axis so that they engage at two points of the wire (26) spaced apart from each other, and wherein the bending device (20, 120) has a bending edge (56) which can be moved substantially perpendicularly to the twisting axis by the associated drive (58) against the twisting axis.

2. Bending machine according to claim 1, characterised in that the feed device (16, 116) has a screw spindle (28) driven by the feed motor (30), on which spindle a feed slide is arranged.

3. Bending machine according to claim 2, characterised in that on the feed slide there is arranged a wire turning motor (32) to whose drive shaft (36) the piece of wire (26) to be inserted can be secured.

4. Bending machine according to claim 2, characterised in that the feed slide is provided with a bearing (122) for the insertion of the piece of wire (26) in a manner allowing rotation.

5. Bending machine according to one of claims 1 to 4, characterised in that the twisting device (18) comprises a jaw-like twisting tool (38) and a rotary plate (40) with a wire passage window (41), wherein the twisting tool (38) and the rotary plate (40) are mounted in bearings (42, 44) fixed to the housing, so as to be rotatable about the longitudinal axis of the inserted wire (26).

6. Bending machine according to one of claims 1 to 4, characterised in that the twisting device (118) comprises a twisting tool (38) and a holding plate (124) which is firmly secured to the housing (22).

7. Bending machine according to claim 5 or 6, characterised in that the rotary plate (40) or the holding plate (124) respectively has a shape which corresponds approximately to a parabola rotating about its axis of symmetry, the axis of symmetry coinciding with the longitudinal axis of the inserted wire.

8. Bending machine according to one of claims 5 to 7, characterised in that the bending device (20, 120) consists of a bending plate (54, 86, 128) with a wire passage window (55) and a rotary plate, wherein the rotary plate is formed by the rotary plate (40) of the twisting device (18).

9. Bending machine according to claim 8, characterised in that the bending plate (54) can be rotated about the longitudinal axis of the wire.

10. Bending machine according to claim 8, characterised in that the bending plate (86) is tiltably mounted in the housing (22).

11. Bending machine according to claim 8, characterised in that the bending device (120) has a bending plate (128) which is suspended in the housing (22) via a guide frame (130) in such a way that it can be moved to every side in a plane perpendicular to the longitudinal axis of the inserted wire.

12. Bending machine according to claim 11, characterised in that the guide frame (130) can be moved by means of two screw drives (132, 134) at right angles to each other, and driven by separate motors (136, 138).

13. Bending machine according to one of claims 1 to 12, characterised in that the drive motors are electric stepping motors.

14. Bending machine according to one of claims 1 to 13, characterised by sensors which monitor the position of the wire and are connected to the computer.

15. Bending machine according to one of claims 1 to 14, characterised by a wire cutting and/or marking device.

16. Bending machine according to one of claims 8 to 10, characterised in that the bending edge (56, 102) engaging on the wire (26) is of circular construction and touches only wire edges.

17. Medico-dental process for the computer-controlled adaptation of a wire to the teeth and/or jaw shape of a patient, fed into the computer, by a series of individual bending and twisting procedures, with the following process steps : first of all the threedimensional desired form of the wire stored in the computer is divided into individual shape elements each with a constant value for the radius of curvature of the bend and if necessary the degree of twist, involving also an evaluation of the direction or bend relative to the rest of the wire shape ; the formation of the shape elements one after the other is then carried out so that the untwisted straight wire is shifted in steps by a variable amount by means of a closable guideway which fixes the wire after each feed step at a specific processing point ; the twisting is completed before this point by a gripping device rotatable in relation to the above-mentioned guideway about the longitudinal axis of the wire ; the bending of the possibly twisted but still straight wire is carried out after this point by the movement of a bending tool towards the wire from a direction relatively variable about the axis of the wire piece located there, and the variation of feed length, amount of twisting, amount and direction of the bending is controlled by the computer by means of separately assigned drives independently of one another.

## Revendications

1. Cintreuse pour adapter un morceau de fil métallique à la forme de la denture et/ou de la mâchoire d'un patient par plusieurs courbages et torsions du fil métallique, comprenant un dispositif d'amenée (16, 116), un dispositif de torsion (18, 118) et un dispositif de courbage (20, 120) ayant chacun leur propre mécanisme d'actionnement (30 ; 46 ; 58) commandé par des instructions de contrôle électroniques, le dispositif de torsion (18, 118) se composant de deux griffes (38 ; 40, 124) qui peuvent tourner l'une par rapport à l'autre sous l'action du mécanisme d'actionnement associé (46) et qui sont disposées avec, dans la direction de l'axe de torsion, un décalage tel qu'elles saisissent le fil métallique (26) en deux points situés à distance l'un de l'autre, et le dispositif de courbage (20, 120) comportant une arête de pliage (56) déplaçable en direction sensiblement perpendiculaire à l'axe de torsion, vers cet axe, sous l'action du mécanisme d'actionnement associé (58).

2. Cintreuse selon la revendication 1, caractérisée en ce que le dispositif d'amenée (16, 116) comporte une broche filetée (28) qui est entraînée par le moteur d'amenée (30) et sur laquelle est monté un chariot d'amenée.

3. Cintreuse selon la revendication 2, caractérisée en ce qu'il est disposé, sur le chariot d'amenée, un moteur (32) de rotation du fil métallique à l'arbre de sortie (36) duquel peut être fixé le morceau de fil métallique (26) à insérer.

4. Cintreuse selon la revendication 2, caractérisée en ce que le chariot d'amenée est muni d'un palier (122) pour l'insertion à rotation libre du morceau de fil métallique (26).

5. Cintreuse selon l'une quelconque des revendications 1 à 4, caractérisée en ce que le dispositif de torsion (18) se compose d'un outil de torsion du type à mâchoires (38) et d'une plaque tournante (40) comportant une fenêtre (41) de passage du fil métallique, l'outil de torsion (38) et la plaque tournante (40) étant montés dans des paliers (42, 44) fixés au carter de manière à pouvoir tourner autour de l'axe longitudinal du fil métallique (26) inséré.

6. Cintreuse selon l'une quelconque des revendications 1 à 4, caractérisée en ce que le dispositif de torsion (118) se compose d'un outil de torsion (38) et d'une plaque de maintien (124) qui est fixée rigidement au carter (22).

7. Cintreuse selon la revendication 5 ou 6, caractérisée en ce que la plaque tournante (40) ou la plaque de maintien (124) présente une forme qui correspond à peu près à une parabole tournant autour de son axe de symétrie, l'axe de symétrie coïncidant avec l'axe longitudinal du fil métallique inséré.

8. Cintreuse selon l'une quelconque des revendications 5 à 7, caractérisée en ce que le dispositif de courbage (20, 120) se compose d'une plaque de courbage (54, 86, 128) comportant une fenêtre (55) de passage du fil métallique et d'une plaque tournante, la plaque tournante étant constituée par la plaque tournante (40) du dispositif de torsion (18).

9. Cintreuse selon la revendication 8, caractérisée en ce que la plaque de courbage (54) peut tourner autour de l'axe longitudinal du fil métallique.

10. Cintreuse selon la revendication 8, caractérisée en ce que la plaque de courbage (86) est montée de façon à pouvoir basculer dans le carter (22).

11. Cintreuse selon la revendication 8, caractérisée en ce que le dispositif de courbage (120) comporte une plaque de courbage (128) qui est suspendue dans le carter (22) au moyen d'un cadre de guidage (130), de telle manière qu'elle soit déplaçable de tous côtés dans un plan perpendiculaire à l'axe longitudinal du fil métallique inséré.

12. Cintreuse selon la revendication 11, caractérisée en ce que le cadre de guidage (130) est déplaçable sous l'action de deux commandes par vis (132, 134) perpendiculaires l'une à l'autre, qui peuvent être entraînées par des moteurs séparés (136, 138).

13. Cintreuse selon l'une quelconque des revendications 1 à 12, caractérisée en ce que les moteurs d'entraînement sont des moteurs électriques pas à pas.

14. Cintreuse selon l'une quelconque des revendications 1 à 13, caractérisée par des détecteurs qui contrôlent la position du fil métallique et qui sont reliés à l'ordinateur.

15. Cintreuse selon l'une quelconque des revendications 1 à 14, caractérisée par un dispositif de coupe du fil métallique et/ou de marquage du fil métallique.

16. Cintreuse selon l'une quelconque des revendications 8 à 10, caractérisée en ce que l'arête de courbage (56, 102) qui s'applique sur le fil métallique (26) est réalisée sous forme circulaire et ne touche que des arêtes du fil métallique.

17. Procédé de dentisterie pour l'adaptation commandée par ordinateur d'un fil métallique à la forme, introduite dans l'ordinateur, de la denture et/ou de la mâchoire d'un patient, par une succession d'opérations individuelles de courbage et de torsion, comprenant les étapes opératoires qui consistent en ce que la forme tridimensionnelle de consigne du fil métallique, mémorisée dans l'ordinateur, est tout d'abord décomposée en éléments de forme individuels ayant chacun des valeurs constantes en ce qui concerne le rayon de courbure du cintrage et éventuellement le degré de pente de la torsion, une détermination de la direction ou du cintrage par rapport à la forme résiduelle du fil métallique étant également effectuée, puis en ce que le façonnage des éléments de forme est effectué successivement par le fait que le fil métallique rectiligne et non tordu est avancé pas à pas, dans une mesure variable, par un guide déplaçable qui, après chaque pas d'avance, fixe le fil métallique en un point de façonnage défini, par le fait que la torsion en amont de ce point est exécutée par une griffe qui peut pivoter autour de l'axe longitudinal du fil métallique par rapport audit guide, par le fait que le courbage du fil métallique éventuellement tordu, mais encore rectiligne, en aval de ce point, est effectué par le mouvement d'un outil de courbage vers le fil métallique à partir d'une direction relative variable autour de l'axe du morceau de fil métallique qui s'y trouve, et en ce que les variations de la longueur d'avance, du degré de torsion, et du degré et de la direction du courbage sont commandées indépendamment les unes des autres par l'ordinateur, au moyen de mécanismes d'actionnement séparés, affectés respectivement à ces opérations.

FIG.1

FIG.5

FIG.2

FIG.3    FIG.4

78 74 82 → 76

88

92    114
22⌐    86
96    100
102

26

98    102
100
22⌐    86
94

104  90

76

74 80 84    112 →

22

78

96    88

102
26
100    86

98    90

80

74

22

0 161 400

3

FIG.7

FIG.6

0 161 400